# EUROPEAN PATENT APPLICATION

(11) **EP 2 823 874 A1**
(43) Date of publication of application: **14.01.2015**
(21) Application number: 13175983.9
(22) Date of filing: 10.07.2013
(51) Int. Cl.: B01D 53/14, B01D 53/18, C10L 3/10

(54) **Process for removing acidic contaminants from a gas stream**

(71) Applicant: Shell Internationale Research Maatschappij B.V., 2596 HR The Hague (NL)
(72) Inventor: The designation of the inventor has not yet been filed
(74) Representative: Matthezing, Robert Maarten

(57) **Abstract**

The invention relates to a process for removing acidic contaminants from a gas stream comprising the steps of:
(a) contacting the gas stream with an absorbent solution that absorbs acidic contaminants to obtain an acidic contaminants-enriched absorbent solution and an acidic contaminants-depleted gas stream;
(b) subjecting at least part of the acidic contaminants-enriched absorbent solution as obtained in step (a) to conditions that allow the formation of a multi-phase mixture which comprises an acidic contaminants-enriched gaseous phase, an acidic contaminants-depleted liquid phase and an acidic contaminants-enriched liquid phase;
(c) separating at least part of the multi-phase mixture as obtained in step (b) into a first acidic contaminants-enriched gaseous phase, a first acidic contaminants-depleted liquid phase and a first acidic contaminants-enriched liquid phase by contacting the multi-phase mixture with a high surface area internal which is arranged within a separator vessel; and
(d) subjecting at least part of the first acidic contaminants-enriched liquid phase as obtained in step (c) to a regeneration treatment to obtain a second acidic contaminants-enriched gaseous phase and a second acidic contaminants-enriched liquid phase.

## Description

### Field of the invention

The present invention relates to a process for removing acidic contaminants from a gas stream, in particular a natural gas stream.

### Background of the invention

Various processes are known to remove acidic contaminants such as carbon dioxide (CO₂), hydrogen sulphide (H₂S), carbonyl sulphide (COS) and mercaptans such as methanethiol (CH₃SH) and ethanethiol (C₂H₅SH) from a gas stream such as a natural gas stream. The methods may be based on physical and/or chemical separation techniques. Physical separation techniques use differences in e.g. boiling, condensation and/or freezing points of the various acidic contaminants to selectively remove one or more of these contaminants in a fractionating column, or differences in density to separate contaminants with different densities by gravity (e.g. gravity settler), by a swirling flow (e.g. in a cyclonic separator) or by spinning flow (e.g. in a centrifugal separator). Chemical separation techniques may employ selective absorption or catalytic reactions to convert an acidic contaminant into a composition that can be easily separated.

When the acidic contaminants are removed using an absorbent component, at least an acidic contaminants-depleted stream and acidic contaminants-enriched absorbent stream are obtained. The acidic contaminants-depleted stream may be further subjected to further processing steps, if desired, before being sent to its intended end-use. The acidic contaminants-enriched absorbent stream is typically regenerated in order to be able to reuse the absorbent.

A process for removing CO₂ and/or H₂S from a gas comprising CO₂ and/or H₂S is disclosed in US 2009/0199709 A1. In this process, a gaseous effluent is first contacted with an absorbent solution so as to obtain a gaseous effluent depleted in acidic contaminants and an absorbent solution enriched with acidic contaminants. The absorbent solution enriched with acidic contaminants is heated to obtain two liquid fractions, viz. a first acidic contaminants-depleted solution fraction and a second acidic contaminants-enriched absorbent solution fraction. The two absorbent solution fractions are then separated from each other in a separating drum before only the second acidic contaminants-enriched absorbent solution fraction is subjected to a regeneration treatment. A considerable drawback of this process resides in the use of a separating drum prior to the regeneration step because the separation in a separating drum takes a long residence time, whilst such a separating drum is in the form of a large vessel which requires considerable processing space and requires considerable absorbent inventory.

Object of the present invention is to provide an improved process for removing acidic contaminants from a gas stream.

### Summary of the invention

It has now been found that such an improved process can be provided when an acidic contaminants-enriched absorbent solution is subjected to conditions that allow the formation of a multi-phase mixture which includes a gas phase and two liquid phases, and the multi-phase mixture is subsequently subjected to a particular separation step, before at least part of an acidic contaminants-enriched liquid phase is subjected to a regeneration step.

Accordingly, the present invention relates to a process for removing acidic contaminants from a gas stream comprising the steps of:
(a) contacting the gas stream with an absorbent solution that absorbs acidic contaminants to obtain an acidic contaminants-enriched absorbent solution and an acidic contaminants-depleted gas stream;
(b) subjecting at least part of the acidic contaminants-enriched absorbent solution as obtained in step (a) to conditions that allow the formation of a multi-phase mixture which comprises an acidic contaminants-enriched gaseous phase, an acidic contaminants-depleted liquid phase and an acidic contaminants-enriched liquid phase;
(c) separating at least part of the multi-phase mixture as obtained in step (b) into a first acidic contaminants-enriched gaseous phase, a first acidic contaminants-depleted liquid phase and a first acidic contaminants-enriched liquid phase by contacting the multi-phase mixture with a high surface area internal which is arranged within a separator vessel; and
(d) subjecting at least part of the first acidic contaminants-enriched liquid phase as obtained in step (c) to a regeneration treatment to obtain a second acidic contaminants-enriched gaseous phase and a second acidic contaminants-enriched liquid phase.

The present process has the major advantages that it allows for a considerable decrease in processing time, whereas at the same time processing space can be reduced significantly because no large separating drums are required and thereby also reducing the required absorbent inventory of the system.

### Detailed description of the invention

In step (a), a gas stream which contains acidic contaminants is contacted with an absorbent solution that absorbs acidic contaminants to obtain an acidic contaminants-enriched absorbent solution and an acidic contaminants-depleted gas stream.

The acidic contaminants-containing gas stream is not limited in any way (in terms of composition, phase, etc.) and may for example be a natural gas stream, a combustion gas, synthesis gas, an air stream, etc.; the contaminated stream may also be a contaminated liquid hydrocarbon stream such as a contaminated LPG stream. Preferably, the acidic contaminants-containing gas stream is a methane-rich stream such as natural gas, containing at least 30 wt.% methane, preferably at least 50 wt.% methane. The person skilled in the art will readily understand that the acidic contaminants may include acidic contaminants such as carbon dioxide (CO₂), hydrogen sulphide (H₂S), carbonyl sulphide (COS) and mercaptans such as methanethiol (CH₃SH) and ethanethiol (C₂H₅SH). However, the present invention is in particular suitable for the removal of CO₂ and/or H₂S from a contaminated gas stream such as natural gas stream or a combustion gas stream.

The acidic contaminants-containing gas stream is suitably contacted in an absorber with the absorbent solution, thereby obtaining the acidic contaminants-depleted gas stream and the acidic contaminants-enriched absorbent solution. Typically, the acidic contaminants-depleted gas stream is obtained at the upper part of the absorber and subsequently removed. The acidic contaminants-depleted gas stream may be further processed if needed before it is sent to its end use. Usually, the acidic contaminants-enriched absorbent solution is obtained at the lower part of the absorber. As the person skilled in the art is familiar with the design and functioning of an absorber, this is not further discussed here in detail. Preferably, the absorber is operated at a temperature in the range of from 10-100°C, more preferably at a temperature in the range of from preferably from 20-90°C, and even more preferably at a temperature of from 30-80°C. The absorber is suitably operated at a pressure in the range of from 1.0-110 bara, more preferably at a pressure in the range of from 20-90 bara.

Preferably, the absorbent solution in step (a) is an aqueous absorbent solution comprising water and an absorbent component. In step (a), the absorbent solution is preferably a single phase. The absorbent solution may comprise two or more absorbent components. The one or more absorbent components are not limited in any way. Usually, the one or more absorbent components are amine compounds. Suitable absorbent solutions have been extensively described in the prior art, see for example A.L. Kohl and F.C. Riesenfeld, 1974, Gas Purification, 2nd edition, Gulf Publishing co. Houston and R.N. Maddox, 1974, Gas and Liquid sweetening, Campbell Petroleum Series. Hence, the absorbent components are not further described here in detail.

Suitably, the absorbent solution in step (a) is an aqueous amine-containing absorbent solution.

Preferably, the amine is selected from the group consisting of tertiary alkylamines, tertiary alkoxyamines, tertiary polyamines, secondary alkylamines, secondary alkoxyamines substituted with alkyl groups, polyamines containing tertiary and secondary and/or primary amine groups and tertiary alkanolamines substituted with alkyl and/or alkanol groups, with or without addition of a component acting as accelerator, such as but not limited to piperazine and derivatives, monoethanolamine, piperidine and derivatives and morpholine and derivatives.

In step (b), at least part of the acidic contaminants-enriched absorbent solution as obtained in step (a) is subjected to conditions that allow the formation of a multi-phase mixture which comprises an acidic contaminants-enriched gaseous phase, an acidic contaminants-depleted liquid phase and an acidic contaminants-enriched liquid phase. Suitable conditions to establish this include acidic conditions, raising the temperature and decreasing the pressure of the acidic contaminants-enriched absorbent solution. Acidic conditions can be established by adding one or more acids to the acidic contaminants-enriched absorbent solution. Suitable acids include for example oxalic acid, phosphoric acid, pyrophosphoric acid, phosphorous acid, hypochlorous acid, hydrochloric acid, nitrous acid, nitric acid, acetic acid, formic acid, propanoic acid, butanoic acid, sulphurous acid, sulphuric acid, aminoacids and any mixture thereof. Suitably, the pressure of the acidic contaminants-enriched absorbent solution as obtained in step (a) is in de range of from 20-110 bara. Suitably, the pressure of the acidic contaminants-enriched absorbent solution is decreased to a level that is in the range of the total acid gas component(s) pressure in the feed gas. Suitably, the temperature of the acidic contaminants-enriched absorbent solution as obtained in step (a) is in de range of from 50-100°C.

Suitably, the temperature of the acidic contaminants-enriched absorbent solution is increased by 5-130°C, preferably by 20-80°C

At least part of step (b) can be carried out before step (c). In that case at least part of the multi-phase mixture is obtained before the regeneration treatment and at least part of the multi-phase mixture so obtained is subjected to the regeneration treatment in step (c). For instance, at least part of step (b) can be carried out by decreasing the pressure and/or temperature of the acidic contaminants-enriched absorbent solution as obtained in step (a). At least part of step (b) can be carried out in a heat exchanger in which the acidic contaminants-enriched absorbent solution is cooled before it is subjected to step (c). At least part of step (b) can also suitably be carried out in the separator vessel during step (c). In operation this will mean that at least part of step (b) may be carried out when the acidic contaminants-enriched absorbent solution is introduced in the upper part of the separator vessel in which step (c) is carried out. The skilled person will therefore appreciate that step (b) may take place at different stages of the present process. Step (b) can for example be carried out partly before step (c) and partly during step (c). Preferably, at least part of step (b) will be carried during step (c). Preferably, most of step (b) will be carried out before step (c).

In step (c), at least part of the multi-phase mixture as obtained in step (b) is separated into a first acidic contaminants-enriched gaseous phase, a first acidic contaminants-depleted liquid phase and a first acidic contaminants-enriched liquid phase by contacting the multi-phase mixture with a high surface area internal which is arranged within a separator vessel. The first acidic contaminants-depleted liquid phase is a water-depleted liquid phase and is relatively absorbent component (typically amine) poor, and the first acidic contaminants-enriched liquid phase is a water-enriched liquid phase and is relatively absorbent component (typically amine) rich.

Suitably, the high surface area internal which is arranged with the separator vessel is a packing.

Suitably, the packing can be a metal or a non-metal packing. Preferably, the packing is a structured packing.

In case the packing is a non-metal packing, the packing can suitably be a carbon packing or a polymer packing. Preferably, the non-metal packing is a polymer packing. The polymer may be a thermoplastic or a mixture of thermoplastics. Suitable examples of polymers to be used in accordance with the present invention include polypropylene (PP), post chlorinated polyvinylchloride (PVC-C), polyvinylidene difluoride (PVDF), and polyether ether ketone (PEEK). Preferably, the packing is a structured packing. Suitably, the packing is a structured polymer packing.

In case the packing is a metal packing, the metal from which the packing can be made is suitably chosen from the group consisting of carbon steels, stainless steels (austenitic and duplex), hastelloy, aluminium-brass and aluminium-bronze alloys and titanium. Preferably, the metal is an austenitic stainless steel or duplex stainless steel. More preferably, the metal is austenitic stainless steel.

In accordance with the present invention a wide variety of structured packings can be applied. Structured packings typically consist of gauzes or thin corrugated metal or polymer plates arranged in such a way that they allow gas or liquid streams to take particular paths through the separator vessel. In this way a large surface area is established for contact with the various different phases in the separator vessel.

Suitably, the structured packing to be used in accordance with the present invention is formed from corrugated sheets of perforated embossed metal, polymer or wire gauze, thereby forming an open honeycomb structure.

Suitably, the high surface area internal has a surface in the range of from 50-1500 m²/m³, preferably in the range of from 100-1500 m²/m³, and more preferably in the range of from 200-1500 m²/m³.

As a person skilled in the art will readily understand, the high surface area internal may also be a random packing or the high surface area internal may be in the form of the internals used in a fire-film contactor, as for example described in US 7,833,499.

Preferably, the packing is a metal packing. Preferably, the packing is a structured metal packing. More preferably, the packing is a structured metal packing. The metal from which the packing can be made is suitably chosen from the group consisting of carbon steels, stainless steels (austenitic and duplex), hastelloy, aluminium-brass and aluminium-bronze alloys and titanium. Preferably, the metal is an austenitic stainless steel or duplex stainless steel. More preferably, the metal is austenitic stainless steel.

Suitably, the structured packing to be used in accordance with the present invention is formed from corrugated sheets of perforated embossed metal or wire gauze, thereby forming an open honeycomb structure.

Suitably, the high surface area internal has a surface in the range of from 50-1500 m²/m³, preferably in the range of from 100-1500 m²/m³, and more preferably in the range of from 200-1500 m²/m³.

As a person skilled in the art will readily understand, the high surface area internal may also be a random packing or the high surface area internal may be in the form of the internals used in a fibre-film contactor, as for example described in US 7,833,499.

In a preferred embodiment of the present process, at least part of the first acidic contaminants-depleted liquid phase as obtained in step (c) and/or at least part of the first acidic contaminants-enriched liquid phase as obtained in step (c) is (are) recycled to step (a).

Suitably, step (c) is carried out at a temperature in the range of from 20-180°C and a pressure in the range 1-100 bara, more preferably at a temperature in the range of from 50-150°C and a pressure in the range 1-30 bara, and even more preferably at a temperature in the range of from 70-120°C and a pressure in the range 2-15 bara.

Step (c) is suitably be carried out during a period of time in the range of from 20 seconds to 20 minutes, preferably during a period of time in the range of 1-10 minutes, and more preferably during a period of time in the range of from 3-5 minutes. These periods of time correspond to the residence time of the various phases in the separator vessel. Such periods of time constitute considerable improvements when compared with a residence time of typically at least 30 minutes when a separating drum is applied.

Preferably, the multi-phase mixture as obtained in step (b) is introduced in an upper part of the separator vessel to be used in step (c).

The regeneration treatment in step (d) serves to separate the first acidic contaminants-enriched liquid phase as obtained in step (c) into a second acidic contaminants-enriched gaseous phase and a second acidic contaminants-enriched liquid phase, for example by using one or more flashing vessels, a column or a combination thereof.

Suitably, step (d) will be carried out in a regenerator vessel.

Preferably, the multi-phase mixture as obtained in step (c) is introduced in an upper part of the regenerator.

In a preferred embodiment of the present invention, at least part of the first acidic contaminants-enriched liquid phase as obtained in step (c) and at least part of the acidic contaminants-depleted liquid phase as obtained in step (c) are subjected to the regeneration treatment in step (d) to obtain a second acidic contaminants-enriched gaseous phase, a second acidic contaminants-enriched liquid phase, and a second acidic contaminants-depleted liquid phase.

In another preferred embodiment of the present invention, at least part of the second acidic contaminants-enriched liquid phase as obtained in step (d) and/or at least part of the second acidic contaminants-depleted liquid phase as obtained in step (c) is (are) recycled to step (a).

In yet another preferred embodiment of the present invention, at least part of the first acidic contaminants-depleted liquid phase as obtained in step (c) and/or at least part of the first acidic contaminants-enriched liquid phase as obtained in step (c) is (are) recycled to step (a).

Suitably, step (d) will be carried out in a regenerator vessel.

The second acidic contaminants-enriched gaseous phase will be obtained at the upper part of the regenerator vessel and a second acidic contaminants-enriched liquid phase will be obtained in a lower part of the regenerator vessel.

As the person skilled in the art is familiar with the design and functioning of a regenerator vessel, this is not further discussed here in detail. Typically, step (d) is carried out at a temperature sufficiently high to ensure that a substantial amount of the acidic contaminants are liberated from the first acidic contaminants-enriched liquid phase. Preferably, step (d) is carried out at a temperature in the range of from 60-170°C, more preferably at a temperature in the range of from 70-160°C, even more preferably at a temperature in the range of from 100-140°C. Typically, step (d) is carried out at a pressure in the range of from 0.001-50 bara, more preferably at a pressure in the range of from from 1.0-30 bara.

Typically the second acidic contaminants-enriched gaseous phase is recovered from the upper part of the regenerator vessel to be used for further processing, if needed. The second acidic contaminants-enriched liquid phase is obtained at a lower part of the regenerator vessel, as the regenerator vessel may comprise draw-off trays. Hence, the person skilled in the art will understand that the term "lower part" as meant according to the present invention refers to a place in the regeneration vessel where liquid accumulates; the bottom part is (although preferably it is) not necessarily the absolute bottom of the regenerator vessel, but may also be a local bottom part such as a draw-off tray.

Step (d) can suitably be carried out in one or more separator vessel. If step (d) is carried out in one regenerator vessel (which it preferably does from the viewpoint of simplicity), the second acidic contaminants-enriched liquid phase is typically obtained at the (absolute) bottom thereof.

Typically, in step (d) in addition to the second acidic contaminants-enriched liquid phase a second acidic contaminants-depleted liquid phase is formed under the prevailing conditions in the regenerator vessel which can also be recovered from the bottom part of the regenerator vessel.

The second acidic contaminants-depleted liquid phase is a waters-depleted liquid phase and is relatively absorber component (typically amine) poor, and the second acidic contaminants-enriched liquid phase is a water-enriched liquid phase and is relatively absorber component (typically amine) rich.

The second acidic contaminants-depleted liquid phase and the second acidic contaminants-enriched liquid phase can simultaneously be (but as separate phases) removed (typically from the bottom of the regeneration vessel) at the same single liquid outlet. Of course, more than one liquid outlet may be present for simultaneously removing the second acidic contaminants-depleted liquid phase and the second acidic contaminants-enriched liquid phase. A short time after the beginning with the removal of the second acidic contaminants-depleted liquid phase and the second acidic contaminants-enriched liquid phase, the two liquid phases are suitably removed in the same ratio as they are formed, ensuring that the absorbent content of the removed stream remains substantially constant over time.

According to a preferred embodiment of the present invention, a part of the second acidic contaminants-enriched liquid phase is removed from the regenerator vessel, heated and reintroduced into the regenerator vessel at a point above the interface of the second acidic contaminants-depleted liquid phase and the second acidic contaminants-enriched liquid phase.

Suitably, at least part of the second acidic contaminants-enriched liquid phase as obtained in step (d) may be reused at several other process stages but is preferably at least partly reused in step (a) as the absorber solution.

Suitably, the second acidic contaminants-enriched liquid phase is cooled before it is reused at another stage in the present process, hereby obtaining a cooled second acidic-contaminants-enriched liquid phase.

Further, it is preferred that the cooled second acidic-contaminants-enriched liquid phase is passed to a collector before it is reused in another stage of the process, particular if said liquid phase is to be reused in the absorber and combined with the second and/or first acidic contaminants-depleted stream into a single phase absorbent stream. Typically, the collector will be a simple vessel.

At least part of the second acidic contaminants-enriched gaseous phase as obtained in step (d) may be cooled in a step (e) and the cooled gaseous phase so obtained may at least partly be recycled to step (d).

Hereinafter the invention will be further illustrated by the following non-limiting drawing and Example.

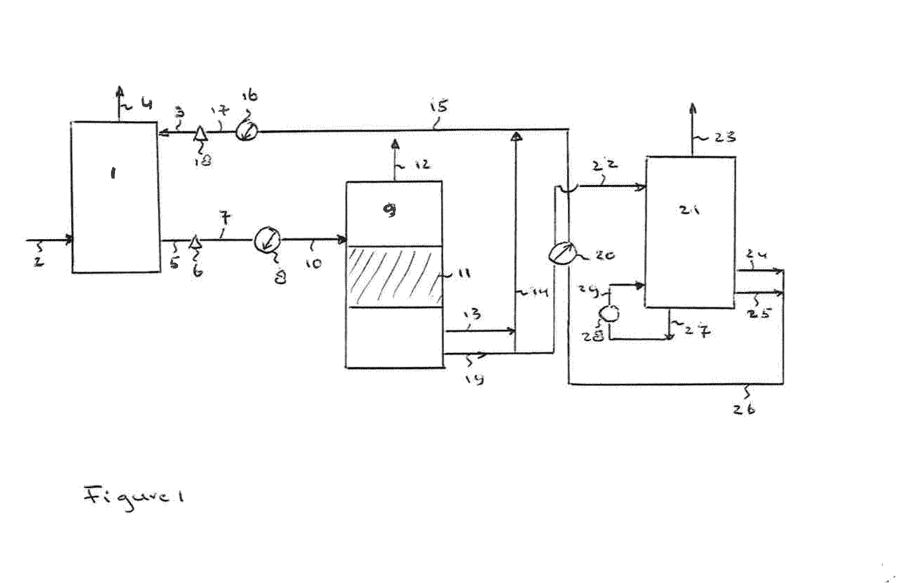

Figure 1 shows a simplified embodiment of a process in accordance with the present invention for removing acidic contaminants from a gas stream.

During use, an acidic contaminants-containing gas stream is introduced into the absorber 1 via a line 2, and contacted in absorber 1 with an absorbent solution which is introduced in absorber 1 via a line 3, thereby obtaining an acidic contaminants-depleted stream which is removed from the upper part of absorber 1 via a line 4 and an acidic contaminants-enriched absorbent solution which is removed from the lower part of absorber 1 via a line 5. The acidic contaminants-enriched absorbent solution is then sent via pump 6 and line 7 to heat exchanger 8 in which the temperature of the acidic contaminants-enriched absorbent solution is increased to allow the formation of a multi-phase mixture which comprises an acidic contaminants-enriched gaseous phase, an acidic contaminants-depleted liquid phase and an acidic contaminants-enriched liquid phase. The multi-phase mixture is the introduced into the separator vessel 9 via line 10. In separator vessel 9 at least part of the multi-phase mixture is separated into a first acidic contaminants-enriched gaseous phase, a first acidic contaminants-depleted liquid phase and a first acidic contaminants-enriched liquid phase by contacting the multi-phase mixture with a high surface area internal 11 which is arranged within separator vessel 9. The first acidic contaminants-enriched gaseous phase is withdrawn from the upper part of the separator vessel 9 via a line 12, the first acidic contaminants-depleted liquid phase is withdrawn via a line 13 and recycled to the absorber 1 via lines 14 and 15, heat exchanger 16, pump 17 and line 3. At least part of the first acidic contaminants-enriched liquid phase is withdrawn from separator vessel 9 via a line 18 and passed to heat exchanger 20. In heat exchanger 20 the first acidic contaminants-enriched liquid phase is heated, and the heated liquid phase so obtained is introduced into regenerator vessel 21 via a line 22. Part of the first acidic contaminants-enriched liquid phase is recycled to absorber 1 via lines 14 and 15, heat exchangers 7 and 16, line 17, pump 18 and line 3. The heated first acidic contaminant-enriched liquid phase is subjected to a regeneration treatment in regenerator vessel 21, thereby obtaining a second acidic contaminants-depleted gaseous phase, a second acidic contaminants-depleted liquid phase and a second acidic contaminants-enriched liquid phase. The second acidic contaminants-enriched gaseous phase is removed from the upper part of regenerator vessel 21 via a line 23, the second acidic contaminants-depleted liquid phase is removed from the lower part of regenerator vessel 21 via a line 24, and the second acidic contaminants-enriched liquid phase is removed from the lower part of regenerator vessel 21 via a line 25. The second acidic contaminants-enriched liquid phase and the second acidic contaminants-depleted liquid phase is then passed to heat exchange 20 via line 26 in which the liquid phases are cooled. The second acidic contaminants-enriched liquid phase and the second acidic contaminants-depleted liquid phase so obtained are then passed via line 15 to heat exchanger 16 in which they are further cooled. The further cooled second acidic contaminants-enriched liquid phase and the further cooled second acidic contaminants-depleted liquid phase are then introduced in absorber 1 via line 17, pump 18 and line 3. Part of the second acidic contaminants-enriched liquid phase can be withdrawn via line 27 and passed to reboiler unit 28 in which the liquid phase is heated, after which it is recycled to a bottom part of regenerator vessel 21 via line 29.

### Example 1

A fresh solvent of a piperazine accelerated (1-[Bis[3-(dimethylamino)propyl]amino]-2-propanol (1b2DMAPA2P), with a 9:1 ratio of 1b2DMAPA2P over the piperazine accelerator and a 47.2 wt% (Karl-Fisher analysis) water content, was circulated in a lab-scale amine absorption unit. The lab-scale amine absorption unit comprises of a gas feed source and mixing facility for N₂ and CO₂, a 27mm ID absorber column packed with Sulzer EX packing (a wire-mesh 316 stainless steel packing) operated at 40 bara, a 27 mm ID regenerator column packed with Sulzer EX packing operated at 2.0 bara with an electrical heating unit in the bottom. The amine is pumped into the top of the absorber at 45°C, where it contacts the feed gas, and fed into the bottom of the absorber at 40°C. The loaded amine circulates from the bottom of the absorber to the regenerator, where it is pre-heated to 100°C before entering the regenerator column. The loaded amine enters the regenerator column in the top section, just below an in line cooler that cools gases exiting from the very top and flows down the regenerator column into the electrically heated reboiler section, where the amine is heated to boiling point. The amine exits the regenerator from the reboiler section, is cooled down and pumped back into the absorber.

The accelerated 1b2DMAPA2P solvent as mentioned above forms two liquid phases in the regenerator, when boiling and loaded with CO₂. The presence of the packing in the regenerator ensures that the liquid phases are demixed, resulting in only the bottom, water-rich phase with 74w% water to be recirculated back to the absorber. Density measurement in the solvent exiting the regenerator over time show a constant density profile at temperatures in the regenerator bottom above the lower critical solution temperature that is different from the density of the 50wt% accelerated 1b2DMAPA2P solvent. Density trends also show a clear step change in density as the bottom temperature of the reboiler goes through the lower critical solution temperature, the temperature at which the solvent exhibits liquid-liquid phase separation. From the above it is clear that in accordance with the present invention the presence of a high surface area internal enhances liquid phase demixing to such an extent that no large residence time in a settling drum is required to achieve separation of both liquid phases.

## Claims

1. A process for removing acidic contaminants from a gas stream comprising the steps of:
(a) contacting the gas stream with an absorbent solution that absorbs acidic contaminants to obtain an acidic contaminants-enriched absorbent solution and an acidic contaminants-depleted gas stream;
(b) subjecting at least part of the acidic contaminants-enriched absorbent solution as obtained in step (a) to conditions that allow the formation of a multi-phase mixture which comprises an acidic contaminants-enriched gaseous phase, an acidic contaminants-depleted liquid phase and an acidic contaminants-enriched liquid phase;
(c) separating at least part of the multi-phase mixture as obtained in step (b) into a first acidic contaminants-enriched gaseous phase, a first acidic contaminants-depleted liquid phase and a first acidic contaminants-enriched liquid phase by contacting the multi-phase mixture with a high surface area internal which is arranged within a separator vessel; and
(d) subjecting at least part of the first acidic contaminants-enriched liquid phase as obtained in step (c) to a regeneration treatment to obtain a second acidic contaminants-enriched gaseous phase and a second acidic contaminants-enriched liquid phase.

2. Process according to claim 1, wherein at least part of the first acidic contaminants-enriched liquid phase as obtained in step (c) and at least part of the acidic contaminants-depleted liquid phase as obtained in step (c) are subjected to the regeneration treatment in step (d) to obtain a second acidic contaminants-enriched gaseous phase, a second acidic contaminants-enriched liquid phase, and a second acidic contaminants-depleted liquid phase.

3. Process according to claim 2, wherein at least part of the second acidic contaminants-enriched liquid phase as obtained in step (d) and/or at least part of the second acidic contaminants-depleted liquid phase as obtained in step (c) is (are) recycled to step (a).

4. Process according to any one of claims 1-3, wherein at least part of the first acidic contaminants-depleted liquid phase as obtained in step (c) and/or at least part of the first acidic contaminants-enriched liquid phase as obtained in step (c) is (are) recycled to step (a).

5. Process according to any one of claims 1-4, wherein the high surface area internal is a packing.

6. Process according to claim 5, wherein the packing is a metal packing.

7. Process according to claim 5 or 6, wherein the packing is a structured packing.

8. Process according to any one of claims 1-7, wherein the high surface area internal has a surface in the range of from 50-1500 m²/m³.

9. Process according to any one of claims 1-8, wherein the gas stream is a natural gas stream.

10. Process according to any one of claims 1-9, wherein the acidic contaminants comprise H₂S and/or CO₂.

11. Process according to any one of claims 1-10, wherein the absorbent solution in step (a) is an aqueous amine-containing absorbent solution.

12. Process according to claim 11, wherein the amine is selected from the group consisting of tertiary alkylamines, tertiary alkoxyamines, tertiary polyamines, secondary alkylamines, secondary alkoxyamines substituted with alkyl groups, polyamines containing tertiary and secondary and/or primary amine groups and tertiary alkanolamines substituted with alkyl and/or alkanol groups.

13. Process according to any one of claims 1-12, wherein step (c) is carried out at a temperature in the range of from 20-180°C and a pressure in the range 1-100 bara.

14. Process according to any one of claims 1-13 wherein step (c) is carried out during a period of time in the range of from 20 seconds to 20 minutes.
